# EUROPEAN PATENT APPLICATION

(11) **EP 1 645 700 A1**
(43) Date of publication of application: **12.04.2006**
(21) Application number: 04747440.8
(22) Date of filing: 13.07.2004
(51) Int. Cl.: E04F 15/18, E04G 23/02, F24D 3/16

(54) **HEATABLE FLOOR STRUCTURE AND METHOD OF CONSTRUCTING THE SAME**

(30) Priority: 15.07.2003 JP 2003196895; 21.04.2004 JP 2004125877
(71) Applicant: Mitsubishi Chemical Functional Products, Inc., Chiyoda-ku, Tokyo 100-0005 (JP)
(72) Inventor: INOUE, Michiaki c/o Mitsubishi Chemical Functional, Inashiki-gun, Ibaraki 3000332 (JP); KUGA, Takeshi c/o Mitsubishi Chemical Functional, Inashiki-gun, Ibaraki 3000332 (JP); INOKUCHI, Yukio c/o Mitsubishi Chemical Functional, Inashiki-gun, Ibaraki 3000332 (JP)
(74) Representative: HOFFMANN EITLE
(86) International application number: PCT/JP2004/009974
(87) International publication number: WO 2005/005749

(57) **Abstract**

The present invention provides a heatable floor structure that can be constructed on the existing floor of a building (residence) without screwing or nailing for fastening, and its construction method.

The heatable floor structure comprises a heating panel set on the surface of the existing floor 1 of a building and a face material 8 disposed on said heating panel. The heating panel 4 has formed on its surface side the grooves in which the heating medium tubes are embedded, and a flexible leaf is affixed thereon. The heating panel is placed under a load of a strength sufficient to regulate positional deviation or rise of the panel from the surface of the existing floor 1.

## Description

### TECHNICAL FIELD

The present invention relates to a heatable floor structure and its construction method. More particularly, it relates to a heatable floor structure that can be adapted to both newly built and existing buildings, and a method for constructing such a floor structure.

### BACKGROUND ART

A variety of floor heating techniques have been proposed and come in practice. A typical embodiment of such floor heating techniques is a heating panel (radiator) system for floor heating of a structure in which the foamed synthetic resin moldings or wooden boards are used as base, with grooves being formed on one side of such base for embedding the heating medium passing tubes, and the surface thereof is covered with a flexible leaf such as aluminum foil (See Patent Literatures 1-4).
Patent Literature 1: Japanese Patent Application Laid-Open (KOKAI) No. 10-170007
Patent Literature 2: Japanese Patent Application Laid-Open (KOKAI) No. 11-281070
Patent Literature 3: Japanese Patent Application Laid-Open (KOKAI) No. 2000-655365
Patent Literature 4: Japanese Patent Application Laid-Open (KOKAI) No. 2003-166719

### PROBLEM TO BE SOLVED BY THE INVENTION

The said heating panel is used principally when a floor heating system is incorporated in a newly constructed building (dwelling house). In a newly built house or even in an existing residence, the owner hesitates to apply a hard-to-remove adhesive on the clean floor surface or boring holes in it by screws or nails in constructing a heatable floor unit in the house, when considering possible remodeling of the house or moving in the future. In the case of a rented house or room, since the renter is, in most cases, obligated to return the house or room by restoring its original state at the end of the term of lease, it is not allowed for the renter to leave the hardly removable traces of the adhesives on the floor surface or the screw or nail holes in it when quitting the house or room.

The first object of the present invention is to provide a heatable floor structure which can be constructed without damaging the existing floor of a building.

The second object of the present invention is to provide a heatable floor structure which can be easily removed to restore the original state of the existing floor at the end of the term of lease.

The third object of the present invention is to provide a method for constructing a heatable floor structure easily adaptable to an existing building.

### MEANS FOR SOLVING THE PROBLEM

As a result of the present inventors' intensive studies on a heatable floor structure that can be adapted to the newly built houses, rented residences, rented rooms and other sorts of housing accommodations without making the screw or nail holes in the floor surface of the building (house) and also with no or minimized necessity of making various sorts of remodeling, it has been found that in installation of a heating panel, if this heating panel is placed under a load (weight) of a strength sufficient to regulate the positional deviation or rise of the panel from the existing floor surface, it is possible to set the heating panel with no fear of damaging the existing floor surface and to construct a desired heatable floor structure.

Thus, in the first aspect of the present invention, there is provided a heatable floor structure comprising a heating panel set on the existing floor surface of a building and a face material disposed on said heating panel, said heating panel having formed on its surface side the grooves in which the heating medium tubes are embedded, with a flexible leaf being laid thereon, said heating panel being placed under a load of a strength sufficient to regulate the positional deviation or rise of the panel from the said existing floor surface.

In one embodiment of the said first aspect of the present invention, a sheet of high specific gravity is attached to the underside of the heating panel in the said heatable floor structure.

In another embodiment of the said first aspect of the present invention, a high-specific-gravity sheet is placed over the heating panel in the said heatable floor structure.

In the second aspect of the present invention, there is provided a method for constructing the heatable floor structure in one embodiment of the first aspect of the present invention, in which a heating panel having formed on its surface side the grooves for embedding the heating medium passing tubes therein, with a flexible leaf being stuck on the upper side thereof, is set on the existing floor surface of a building, which method comprises the steps of disposing a sheet of high specific gravity on the said existing floor surface, securing the said heating panel on the said high-specific-gravity sheet, and laying a face material over the said heating panel.

In the third aspect of the present invention, there is provided a method for constructing the heatable floor structure in the second embodiment of the first aspect of the present invention, in which a heating panel having formed on its surface side the grooves for embedding the heating medium tubes therein, with a flexible leaf stuck on the upper side thereof, is set on the existing floor surface of a building, which method comprises the steps of disposing the said heating panel on the said existing floor surface, placing a sheet of high specific gravity on the said heating panel, disposing a partition on the said sheet, and laying a face material over the said partition.

In a form of the heatable floor structure in the first embodiment of the first aspect of the present invention, the floor structure comprises a sheet of high specific gravity laid on the existing floor surface of a building and having a nonwoven fabric attached to the surface side thereof, a heating panel secured on the said sheet, and a face material laid over the said heating panel, in which the said heating panel has formed on its surface side the grooves where the heating medium passing tubes are embedded, with a flexible leaf being stuck on the upper side thereof, the said panel is affixed to the nonwoven fabric on the said sheet surface by an adhesive tape attached to the backside of the panel.

In another form of the heatable floor structure in the first embodiment of the first aspect of the present invention, the floor unit comprises a sheet of high specific gravity laid on the existing floor surface of a building and having an adhesive tape attached to the surface side thereof, a heating panel secured on the said sheet, and a face material laid over the said heating panel, in which the said heating panel has formed on its surface side the grooves where the heating medium tubes are embedded, with a flexible leaf being stuck on the upper side thereof, and is secured to the adhesive tape on the said sheet surface by a nonwoven fabric attached on the backside of the panel.

In one mode of practice of the method of constructing the heatable floor structure in the second aspect of the present invention, the method comprises the steps of: disposing a high-specific-gravity sheet, which has a nonwoven fabric attached to its surface side, on the existing floor surface of a building; fixing a heating panel, which has an adhesive tape attached to its backside, on the said high-specific-gravity sheet; and a face material over the said heating panel with a weak adhesive or agglutinant applied between them, in which:
the said heating panel has formed on its surface side the grooves where the heating medium passing tubes are embedded, with a flexible leaf being stuck on the upper side thereof, and
in the step of fixing the said heating panel on the said high-specific-gravity sheet, a parting strip is temporally placed on the surface of the said sheet, and after positioning the said panel on the said parting strip, the said parting strip is removed to thereby secure the adhesive tape of the said heating panel to the nonwoven fabric of the said sheet.

In another mode of practice of the method of constructing the heatable floor structure in the second aspect of the present invention, the method comprises the steps of: disposing a high-specific-gravity sheet, which has an adhesive tape attached to its surface side, on the existing floor surface of a building; fixing a heating panel, which has a nonwoven fabric attached to its backside, on the said high-specific-gravity sheet; and laying a face material over the said heating panel with a weak adhesive or agglutinant applied between them, in which the said heating panel has formed on its surface side the grooves where the heating medium tubes are embedded, with a flexible leaf being stuck on the upper side thereof, and in the step of fixing the said heating panel on the said high-specific-gravity sheet, a parting strip is temporally placed on the surface of the said sheet, and after positioning the said heating panel on the said parting strip, this parting strip is removed to thereby secure the nonwoven fabric of the said heating panel to the adhesive tape of the said high-specific-gravity sheet.

### EFFECT OF THE INVENTION

According to the heatable floor structure in the first aspect of the present invention, since the heating panel is placed under a load of a strength sufficient to regulate the positional deviation and rise of the panel from the existing floor face, there is no need of fixing the heating panel with screws or nails, so that no screw holes or nail holes are formed in the existing floor surface.

In the heatable floor structure according to the first embodiment of the first aspect of the present invention, a sheet of high specific gravity is attached to the underside of the heating panel to exert a load of a sufficient degree to regulate the positional deviation and rise of the panel from the existing floor face, so that separation and slide (shifting) of the heating panel is prevented.

According to the heatable floor struture in another embodiment of the first aspect of the present invention, a high-specific-gravity sheet is laid on the heating panel to give thereto a load of a sufficient strength to regulate the positional deviation and rise of the panel from the existing floor face, so that separation and slide (shifting) of the heating panel is prevented.

According to the methods for constructing the heatable floor structure in the second and third aspects of the present invention, when installing the heating panel on the existing floor surface of a building, it is possible to set the heating panel in position in a state free of separation or slide (shifting) by simply disposing the said structural members in the order of high-specific-gravity sheet, heating panel and face material, or in the order of heating panel, high-specific-gravity sheet and face material on the existing floor surface, so that the construction work is very simple and easy to carry out.

According to the heatable floor structure construction methods in the second and third aspects of the present invention, no screwing or nailing is employed for securing between the existing floor surface of a building and the high-specific-gravity sheet, between the high-specific-gravity sheet and the heating panel, between the heating panel and the face material, between the existing floor surface and the heating panel, between the heating panel and the high-specific-gravity sheet, and between the high-specific-gravity sheet and the face material, the work for restoring the original state of the floor is easy and no damage is left on the floor surface after restoration of its original state. Further, the recovered high-specific-gravity sheets, heating panels and face material can be reused since they have no screw or nail holes.

In one form of the heatable floor structure according to the first embodiment of the first aspect of the present invention, the heating panel is secured to a nonwoven fabric on the high-specific-gravity sheet surface by an adhesive tape attached to the backside of the panel and the load of the high-specific-gravity sheet is exerted to the heating panel, so that separation and slide (shifting) of the heating panel is prevented.

In another form of the heatable floor structure according to the first embodiment of the first aspect of the present invention, the heating panel is secured to an adhesive tape on the high-specific-gravity sheet surface by a nonwoven fabric attached to the backside of the panel and the load of the high-specific-gravity sheet is applied to the heating panel, so that there takes place no separation or slide (shifting) of the heating panel.

In one mode of practice of the heatable floor structure construction method according to the second aspect of the present invention, a parting strip is temporally interposed between the nonwoven fabric on the surface side of the high-specific-gravity sheet and the adhesive tape attached to the backside of the heating panel, so that positioning of the heating panel in the step of securing it on the high-specific-gravity sheet is easy.

In another mode of practice of the heatable floor structure construction method according to the second aspect of the present invention, a parting strip is temporally interposed between the adhesive tape attached to the surface side of the high-specific-gravity sheet and the nonwoven fabric attached to the backside of the heating panel, so that positioning of the heating panel in the step of securing it on the high-specific-gravity sheet is easy.

### BRIEF DESCRIPTION OF THE DRAWINGS

FIG. 1 is a perspective assembly drawing showing the heatable floor structure in one embodiment of the first aspect of the present invention and the heatable floor structure construction method in the second aspect of the present invention.
FIG. 2 is a vertical sectional view showing the heatable floor structure in one embodiment of the first aspect of the present invention, in which a high-specific-gravity sheet is laid below the heating panel.
FIG. 3 is a vertical sectional view showing schematically the heatable floor structure in one embodiment of the first aspect of the present invention, in which a nonwoven fabric is disposed on the surface of the high-specific-gravity sheet, and face fasteners are provided on the backside of the heating panel.
FIG. 4 is a vertical sectional view illustrating one mode of practice of the heatable floor structure construction method in the second aspect of the present invention.
FIG. 5 is a vertical sectional view showing schematically another form of the heatable floor structurre according to the first embodiment of the first aspect of the present invention, in which the face fasteners are provided on the surface of the high-specific-gravity sheet and a nonwoven fabric is disposed on the backside of the heating panel.
FIG. 6 is a vertical sectional view showing schematically the heatable floor structure in another embodiment of the first aspect of the present invention, in which a high-specific-gravity sheet is laid on the heating panel.

### BEST MODE FOR CARRYING OUT THE INVENTION

The heatable floor structure (hereinafter referred to simply as "floor structure") and the construction method of such a heatable floor structure (hereinafter referred to simply as "construction method") according to the present invention will be described with reference to their embodiments. The floor structure of the present invention can be applied to the existing floors of the buildings. In the present invention, the term "buildings" is used to refer to detached houses, multiple dwelling houses, commercial buildings, hotels, various kinds of protective institutions, hospitals, kindergartens, day nurseries, and such. The present invention finds its particularly useful application to the existing floors of the rental buildings, rental houses and rental rooms. The "existing floor" of a building referred to in the present invention means the as-is floor of the particular building, and such "floor" may be made of various materials such as concrete, wooden board and plywood, which are not specifically defined in the present invention.

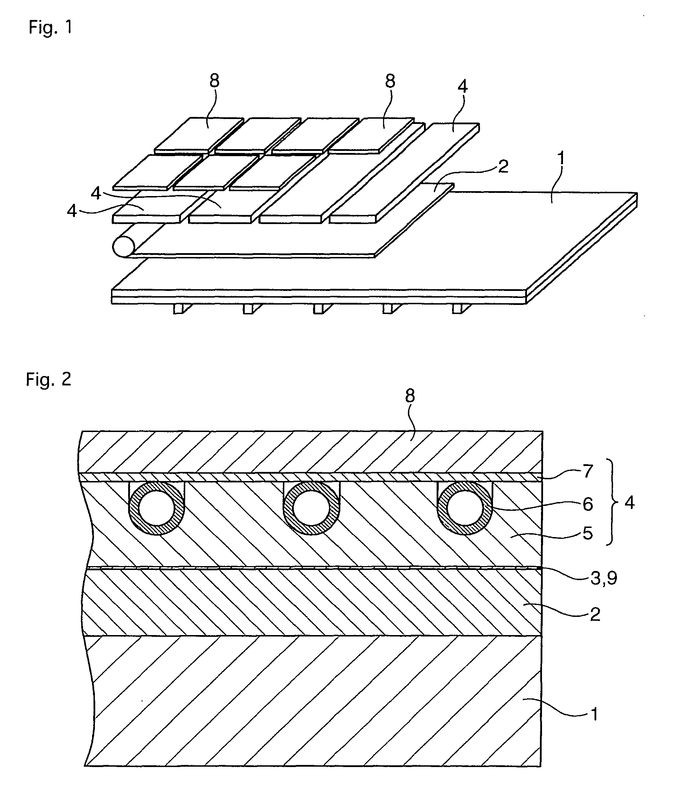

The first aspect of the present invention is an invention relating to a floor structure. This floor structure comprises a heating panel (radiating board) set on the floor surface of a building and a face material laid on the said heating panel. The heating panel has formed on its surface side the grooves where the heating medium passing tubes are embedded, and a flexible leaf is affixed on the upper side thereof. The heating panel is placed under a load of a strength sufficient to regulate the positional deviation and rise of the panel from the existing floor surface. FIGS. 1 to 3, 5 and 6 show the floor unit in the first aspect of the present invention, wherein reference numeral 1 designates a existing floor, 4 a heating panel, 8 a face material, 8' an adhesive, 6 heating medium passing tubes, and 7 a flexible leaf, typically an aluminum foil.

The said heating panel comprises principally a slat having the tube-embedding grooves in its surface, the heating medium passing tubes embedded in the said grooves, and a flexible leaf covering the surface of the said slat. This slat serves for supporting the heating medium tubes by the embedding grooves formed on its surface. It is made of a material having relatively high rigidity and heat resistance so that it can perform its function to support the heating medium tubes. As examples of such a material, wooden board, plywood and synthetic resin plate can be mentioned, with foamed synthetic resin plate being preferred.

Examples of the said synthetic resins include polyamide resins such as polyamide 6, polyamide 6.6 and polyamidoimide, polyolefin resins such as polyethylene, polypropylene and ethylene-propylene copolymer, polyester resins such as polyethylene terephthalate and polybutyrene terephthalate, polyvinyl chloride, and polyurethane. The foaming rate of the said foamed synthetic resin plate is preferably as low as about 1.5 to 20 times.

The dimensional size and planarity of the slat are not specifically defined, but it preferably has, after assemblage, a planar configuration which is same as or similar to the high-specific-gravity sheet (the sheet indicated by reference numeral 2 in the drawings). The said slat is preferably made relatively small in area so that it won't become bulky and to pack or transport. Also, it is preferably so shaped that a plural number of such slats can be easily combined together in the construction work.

The thickness of the slat can be properly decided by taking into consideration the specific gravity and rigidity of the material of the slat. However, a too large thickness of the slat makes it too bulky and heavy in packing and transporting, so that its thickness is preferably made as small as possible within limits not affecting its ability to support the heating medium tubes. For instance, in case where the slat is made of foamed polystyrene, its thickness preferably falls within the range of about 5 to 25 mm.

The slat is provided with the grooves in which the heating medium tubes can be embedded. The specifications of these grooves are properly decided according to the schemed arrangement of the heating medium tubes to be embedded in the grooves. For example, in case where it is desired to arrange the heating medium tubes so that they will extend rectilinearly, the grooves are formed equally rectilinearly on the slat. In case where the heating medium tubes are arranged with curves in part, the grooves are formed with a proper combination of the rectilinear portions and the curved portions. The dimensional size of the grooves is preferably designed to be substantially same as the outer diameter of the heating medium tubes so that the tubes embedded in the grooves won't come off easily. The sectional configuration perpendicular to the longitudinal direction of the grooves is preferably U-shaped in conformity to the contour of the tubes.

The heating medium tube is designed to function to radiate heat to the outside thereof by passing a heating medium in its inside space (in the tube), and it needs to have a high degree of flexibility, mechanical strength, heat resistance and chemical resistance. The tubes which exhibit such properties include, for example, crosslinked polyethylene tube, polybutene tube, polypropylene tube, and resin tubes having a metal wire embedded in the tube wall. Among them, crosslinked polyethylene tube and polybutene tube are preferred. The diameter of the heating medium tube used in the present invention, although variable depending on the way of use of the heating panel, is usually in the range of 5 to 30 mm in outer diameter and 3 to 25 mm in inner diameter. As the heating medium passed through these tubes, hot water, steam, oil and such can be used.

The flexible leaf functions to prevent the heating medium tubes embedded in the grooves in the slat from coming off the grooves and to let the heat from the heating medium tubes pervade throughout the heating panel. This flexible leaf may be of any type provided that it is made of a material with excellent heat conductivity. It may be, for instance, a metal foil such as aluminum foil, tin foil, copper foil or stainless steel foil, a woven or nonwoven fabric, a resin film or sheet, or a laminate thereof. The woven or nonwoven fabric is preferably one made with a metal of high heat conductivity, such as iron, soft steel, stainless steal, nickel alloy, copper alloy, titanium alloy or aluminum alloy. Aluminum foil is especially preferred in view of ease of manufacture and low cost.

The plane configuration and size of the flexible leaf are preferably same as those of the heating panel, but the plane configuration may be made smaller in area than the heating panel, in case where the leaf is designed to have a size that can cover at least the portion where the heating medium tube is embedded. Thickness of the flexible leaf, though variable depending on its material, is preferably in the range of 10 µm to 2 mm because a too small thickness can not provide sufficient strength, causing easy break of the leaf, while a too large thickness makes the heating panel heavy and is also uneconomical.

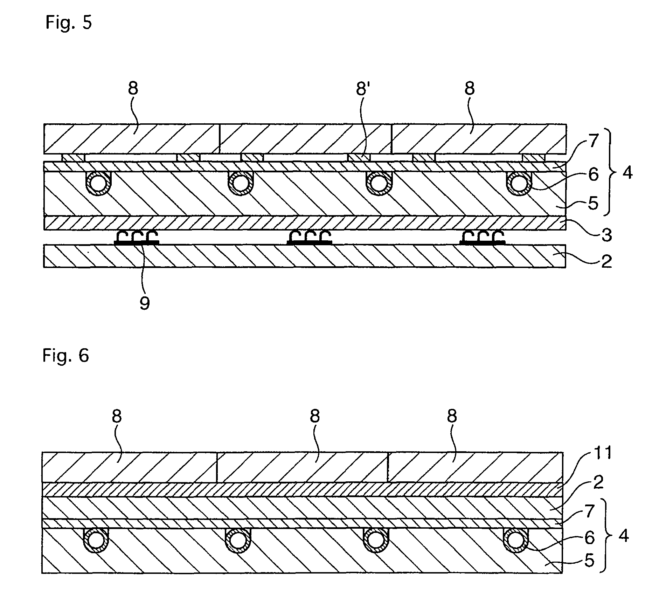

In the first aspect of the present invention, the way of exerting a load to the heating panel is not specifically defined; there can be used, for example, a method in which a sheet of high specific gravity is attached to the underside of the heating panel to thereby exert a load to the panel (first embodiment) and a method in which a high-specific-gravity sheet is placed on the heating panel so as to give a load to the panel (second embodiment). The first embodiment is shown in FIGS. 1 to 3 and 5, and the second embodiment is shown in FIG. 6. Reference numeral 2 in the drawings designates a sheet of high specific gravity.

In the floor structure according to the said first embodiment, a high-specific-gravity sheet is attached to the underside of the heating panel. In other words, the heating panel is secured to the upper side of the high-specific-gravity sheet laid on the existing floor surface. The heating panel weighs per se about 3 to 4 kg/m², and its weight will be increased to about 6.5 to 7.5 kg/m² when a face material described later is fitted on its surface. Therefore, if the heating panel is set in the form as it is on the floor surface, there is a possibility that the heating panel would rise up or shift from the floor surface. In the present invention, such rise or shift (positional deviation) is prevented by securing the heating panel to the high-specific-gravity sheet.

The "sheet of high specific gravity" used in the present invention is a sheet whose density is usually not less than 1.5 g/cm³, preferably not less than 1.8 g/cm³, with its upper limit being not specifically defined but usually not more than 4.0 g/cm³. The load exerted to the floor surface by this high-specific-gravity sheet per unit area is supposed to be not less than 1.5 kg/m², preferably in the range of 1.5 to 50 kg/m², more preferably 3 to 30 kg/m². A high-specific-gravity sheet with a density such as defined above, when placed on the existing floor surface, is attached tightly to the floor surface by its own weight and thereby prevented from rising up or sliding (shifting) from the floor surface. An adhesive may be applied at the interface between the high-specific-gravity sheet and the floor surface for further securement against sliding (shifting) of the sheet on the floor surface. The adhesive used this purpose is preferably of the type whose adhesive force is weak and which scarcely leaves its trace when it is removed.

As the high-specific-gravity sheet, an asphalt-incorporated short fiber sheet and a filler-incorporated rubber sheet can be cited as examples. Thickness of this high-specific-gravity sheet, though variable depending on its density, is usually in the range of 1 to 10 mm. Its area is properly decided in accordance with dimensions of the site where the heating floor is constructed, but generally it is 100 to 500 cm². At a site with a wide space, a plural number of the high-specific-gravity sheets, each with a relatively small area, may be combined so that they will cover the whole area. The high-specific-gravity sheet may be either a plate-like one or a type that can be rolled up, the latter type being preferred as the sheet can be removed by simply rolling it up when restoring the original state of the floor.

The short fiber used for the asphalt-incorporated short fiber sheet may be either natural or synthetic and is of a length with which it can exhibit enough flexibility to be capable of being rolled up when it is made into a high-specific-gravity sheet by mixing asphalt, such length being preferably in the range of 1 to 30 mm. The asphalt used in the present invention is a solid or half-solid bituminous mixture whose main component is a complex hydrocarbon. It may be either natural asphalt or petroleum asphalt obtained as a residue after petroleum fractionating. The mixing ratio of asphalt is preferably in the range of 5 to 30% by weight.

The rubber of the filler-incorporated rubber sheet may be either natural or synthetic, but the latter is preferred. As synthetic rubber, acrylonitrile-butadiene rubber (NBR), styrene-butadiene rubber (BR), polybutadiene, polychloroprene (CR), polyisoprene, isoprene-isobutyrene rubber (HR), ethylene-propylene rubber (EPR, EPDM), chlorosulfonated polyethylene and chlorinated polyethylene can be cited. As filler, powdery inorganic fillers are preferred, the examples thereof including carbon black, silica, mica, clay, graphite, calcium carbonate, titanium oxide, alumina and aluminum hydroxide. The mixing ratio of the filler is preferably in the range of 5 to 60% by weight.

In the first embodiment of the first aspect of the present invention, a high-specific-gravity sheet is attached to the underside of the heating panel by making use of an anchor effect, adhesive force, glutinous force, adsorptive force, magnetic force or a combination thereof. Utilization of this principle for setting the heating panel in position facilitates attachment and detachment of the high-specific-gravity sheet and the heating panel without giving damage to their surfaces. The expression "facilitates attachment and detachment" means that the sheet can be stripped off with a force of not more than 15 N/10 mm, preferably not more than 10 N/10 mm, in the peel test described below.

The peel test used here is a test conducted in conformity to JIS Z 0237 "90° peel test". In the test, 5 test pieces of 20 mm X 50 mm or greater were prepared, each being bonded to an adherend, then a load of 3 kgf was applied to each test piece by a roller which was moved back and forth twice pressingly on each test piece, and then, after allowing approximately 24-hour curing, the force required for peeling the test piece at a rate of 300 mm/min at normal temperature was measured. For instance, a 20 mm X 100 mm face fastener secured on a 70 mm X 100 mm 10 times expanded resin-made adherend and a 20 mm X 50 mm nonwoven fabric secured to a PE base sheet are used, and these nonwoven fabric and face fastener are bonded together under the said conditions and subjected to the peel test. By this test, it can be confirmed that the force required for peeling is not more than 10 N/10 mm.

The "anchor effect" utilized in securing the high-specific-gravity sheet to the heating panel is an effect provided by so-called mechanical bonding or bonding by a fastener effect. More specifically, a face fastener (male) is attached to either the surface side of the high-specific-gravity sheet or the backside of the heating panel and a nonwoven fabric is attached to the other side, or a face fastener (male) is attached to one side and a mating face fastener (female) is attached to the other side, thereby to secure the high-specific-gravity sheet and the heating panel to each other. In FIGS. 1 to 3 and 5 showing the above-explained embodiment, reference numeral 3 indicates a nonwoven fabric and 9 a face fastener.

The nonwoven fabric used in the present invention is a fabric made by having the natural or synthetic fibers intertwined each other into a mat-like or thin cotton-like sheet with an adhesive or by dint of their own fusion-bonding properties. There are available dry process and wet process for producing such a nonwoven fabric. The purpose of use of a nonwoven fabric in the first embodiment of the first aspect of the present invention is to increase and maintain the bonding strength with the opposing face (for example, the face fastener on the surface side of the high-specific-gravity sheet or the backside of the heating panel), so that bulky one produced by the dry process is preferably used as the nonwoven fabric. The nonwoven fabric is of a thickness in the range of 0.1 to 10 mm, preferably 0.5 to 5 mm, and its basis weight is 10 to 500 g/m², preferably 40 to 200 g/m².

When attaching a nonwoven fabric to the high-specific-gravity sheet or to the heating panel, an adhesive is preferably used as an intermediate. The type of adhesive usable here is not restricted, but one having no corrosive action on the high-specific-gravity sheet, heating panel and nonwoven fabric is preferably used. Such an adhesive may be properly selected from the commercially available products. The amount of the adhesive to be applied to the nonwoven fabric is preferably minimized to allow maintenance of bulkiness of the nonwoven fabric. The nonwoven fabric adheres closely to the face fastener and the adhesive tape (such as double-sided adhesive tape) attached to the opposing face to inhibit slide (shifting) at the interface between them.

The face fastener (male) is of a structure having the small projections on the sheet surface which thrust into the inter-fiber spaces in the sheet surface of the nonwoven fabric or the mating face fastener (female) to join them together. In joining of the face fastener (male) to the nonwoven fabric or another face fastener (female), separation or slide (shift) at the interface with the nonwoven fabric or another face fastener (female) is prevented as the small projections force their way into the inter-fiber spaces in the nonwoven fabric or female face fastener.

In the first embodiment of the first aspect of the present invention, in order to secure the high-specific-gravity sheet to the heating panel by making use of adhesive force, they are stuck tightly to each other through the medium of a double-sided adhesive tape with weak adhesive force or a hot-melt adhesive. "Weak adhesive force" means an adhesive force that can ensure easy peel in the above-described peel test. A hot-melt adhesive can be easily applied and removed by electromagnetic induction heating or other means. As for the method for securing the said members to each other by making use of a sticking or bonding force, for instance the high-specific-gravity sheet and the heating panel are secured to each other by interposing a sticking member between them. Examples of such sticking members are sticking sheets and tapes.

As means for fixing the high-specific-gravity sheet and the heating panel to each other by making use of an adsorptive force, a method is used in which they are attached to each other with a member having adsorbing properties sandwiched between them. Examples of the members having adsorbing properties are adsorptive sheets, sucking-discs and sucking sheets. In case of using the sucking-discs, they are previously fixed to the high-specific-gravity sheet or the heating panel with an adhesive or an adhesive tape.

As means for securing the high-specific-gravity sheet and the heating panel to each other by making use of a magnetic force, a method is exemplified in which a magnet is fixed either on the surface side of the high-specific-gravity sheet or on the backside of the heating panel while mounting a magnet-attracted metal on the opposite side, or they are magnetically secured to each other by setting a magnetic on both opposing sides. The magnet or magnet-attracted metal used for the above purpose is previously fixed in position with an adhesive or an adhesive tape. As for the type of the magnet used, it may be either a permanent magnet or a magnetized metal which can be magnetized or demagnetized as desired. The above-said securing means may be used in combination, for instance by combining a double-sided adhesive tape and a nonwoven fabric.

Use of the so-called fixing members such as the said face fastener, both-sided adhesive tape with weak adhesive force, hot-melt adhesive, adsorbing sheet, sucking-disc, sucking sheet and magnet in securing the high-specific-gravity sheet and the heating panel allows easy detachment of these members when so desired and can simplify the work of restoring the original state of the floor at the expiration of the term of lease of, for example, a rental house. As for the location where the said fixing members are applied, they need not be provided over the entire backside of the heating panel but are preferably provided at the limited parts, for example, at the parts around the heating panel and along the heating medium tube-embedded grooves. In case of using an adhesive tape as the fixing member, the tape is of a width of normally 5 to 100 mm and the area taken therefor is 2 to 50%, preferably 5 to 20% of the whole area of the heating panel.

As explained above, there are several means for securing the high-specific-gravity sheet and the heating panel to each other. Specifically, as one form of practice of the first embodiment in the first aspect of the present invention, there is presented a structure in which the heating panel is secured to a nonwoven fabric on the surface of a high-specific-gravity sheet with an adhesive tape affixed to the backside of the heating panel. Proposed as another form of practice is a structure in which the heating panel is secured to an adhesive tape on the surface of a high-specific-gravity sheet by a nonwoven fabric stuck to the backside of the heating panel. FIGS. 1 to 3 illustrate one form of practice in the first embodiment of the first aspect of the present invention, and FIG. 5 illustrates another form of practice.

A face material (finishing material) is disposed on the said heating panel for ameliorating floor appearance. This face material is laid on the surface of the flexible leaf plate of the heating panel, if necessary, with a weak adhesive or sticking agent interposed between them. Usually the face material is small in thickness and light in weight, so that when it is fixed to the heating panel, it is prevented from rising up or warping. Thus, by interposing a weal adhesive or sticking agent between the heating panel and the face material, it is possible to prevent slide (shift) at the interface between the heating panel and the face material. As such a weak adhesive or sticking agent, any suitable one can be selected from the commercial products as far as it is capable of performing the above-said function.

Typical examples of the face material are decorative sheets, ***tatami*** mat and carpet. The decorative sheets used in the present invention are preferably plate-like ones made of wood, foamed synthetic resin, nonwoven fabric, rubber, tile, stone or the like. As a face material of the type comprising a combination of a plurality of parts assembled into a specified pattern, there is preferably used one of the so-called movable floor system in which the peripheral edges are fitted together integrally by concave-convex engagement. In case where the face material tends to flex because of small thickness or where tile or stone is used as the face material, a stiff plate such as plywood may be allowed to exist as an intermediate, with the face material being attached on this stiff plate.

Now, the construction method in the second aspect of the present invention is explained. The second aspect of the present invention concerns a construction method of the floor structure according to the first embodiment in the first aspect of the present invention. This construction method, in adapting the said heating panel to the existing floor surface, comprises the steps of disposing a high-specific-gravity sheet on the existing floor surface, fixing the heating panel on the said high-specific-gravity sheet, and laying a face material on the heating panel.

In the initial step of disposing a high-specific-gravity sheet, the size of this sheet is usually equalized to the area of the existing floor. Preferably no adhesive is applied between the existing floor surface and the high-specific-gravity sheet for facilitating the work of restoring the original state of the floor at the end of the term of lease. When an adhesive is applied as an exceptional case, such an adhesive should be one which is weak in adhesive force and whose trace of application is scarcely left after it is removed.

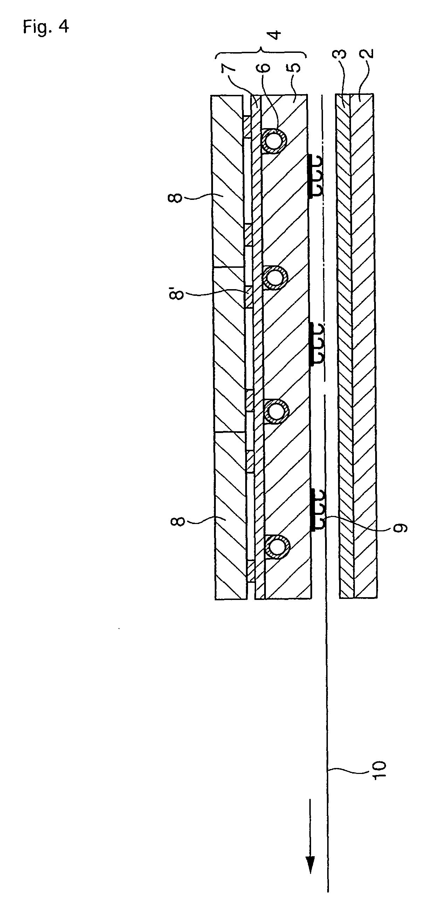

In the step of fixing the heating panel on the high-specific-gravity sheet, the said panel is laid and anchored on the high-specific-gravity sheet to exert a downward load to the heating panel. In anchoring the heating panel, it is placed temporally on the high-specific-gravity sheet and then positioned. In this case, since a fixing member such as mentioned above is provided on one or both of the surface side of the high-specific-gravity sheet and the backside of the heating panel, a parting strip is interposed between them for preventing them from being joined to each other when they are temporally positioned. In FIG. 4, reference numeral 10 designates a parting strip.

As the parting strip, there can be used, for instance, papers, resin-made films, metal foils, and laminates thereof. There are various patterns of disposing the parting strip:
(1) The parting strip is previously disposed on the surface side of the high-specific-gravity sheet; (2) The parting strip is previously disposed on the backside of the heating panel; (3) After disposing the high-specific-gravity sheet on the floor surface, the parting strip is placed on the surface side of the said sheet. In the above methods (1) and (2), the parting strip is preferably temporally fixed to the surface side of the high-specific-gravity sheet or to the backside of the heating panel with a strength of such a degree as will be able to prevent separation or shifting of the panel when it is temporally positioned.

Since the parting strip is removed from between the high-specific-gravity sheet and the heating panel after positioning, this strip is preferably small in thickness and light in weight and also has such a degree of strength as will remain free from damage when removed. In view of the above, the parting strip used in the present invention is preferably one which is 0.005 to 2 mm in thickness, 1 to 1,000 g/m² in weight and not lower than 1 N/5 cm (JIS L1096) in tensile strength though these elements are variable depending on the material of the strip. After positioning of the heating panel, it is rolled up and the parting strip is removed. After removing the parting strip, the heating panel is pressed down from above thereof to bond the fixing member interposed between the high-specific-gravity sheet and the heating panel. That is, the adhesive tape of the heating panel is secured to the nonwoven fabric of the high-specific-gravity sheet, or the nonwoven fabric of the heating panel is secured to the adhesive tape of the high-specific-gravity sheet. It is thereby possible to prevent the high-specific-gravity sheet and the heating panel from sliding (shifting) at their interface. FIG. 4 shows one form of fixing the heating panel having an adhesive tape attached on the underside thereof to the high-specific-gravity sheet having a nonwoven fabric attached on the upper side thereof, in the construction method according to the second aspect of the present invention.

The location of disposition of the heating panel on the floor surface may be limited to a section of the floor where it is desired to heat, and the heating panel may be designed smaller in area than the high-specific-gravity sheet. A dummy board (a board same as forming the heating panel but having no fluid passing tubes embedded therein) is fitted at the portion where the heating panel is absent and the high-specific-gravity sheet is left exposed. Finally, a face material is laid over the heating panel and the dummy board. If necessary, a weak adhesive or a sticking agent such as mentioned above may be applied between the heating panel and dummy board and the face material.

The heating medium passed through the heating medium tubes in the installed heating panel is adjusted in temperature and pressure by a heating medium circulator and distributed (circulated) to the heating medium tubes through a header. The heating medium circulator is set at an appropriate location either outdoors or indoors. The floor structure according to the first aspect of the present invention described above can be adapted to both newly constructed and existing buildings.

In a building where the said floor structure has been adapted, there may be a necessity to dismantle the once constructed floor structure for restoring the original state of the existing floor at the end of the term of lease of the building. Here, the procedure of dismantling the floor structure is explained. First, the face material is removed, and then the heating panel is separated. Since merely a weak adhesive or a sticking agent is placed between the face material and the heating panel, there is no difficulty in separating them at the interface. Also, the heating panel and the underlaid high-specific-gravity sheet are merely attached tight to each other with the intermedium of a nonwoven fabric and an adhesive tape, and only the nonwoven fabric is broken when peeling them off at the interface, so that it is easy to separate the heating panel from the high-specific-gravity sheet.

After removing the high-specific-gravity sheet, the heating panel is finally separated from the existing floor surface. No adhesive is applied, in many cases, between the existing floor surface and the heating panel, and even if an adhesive is applied between them, such an adhesive is a weakly adhering type whose trace of adhesion is scarcely left on the floor surface after removal, so that even if part of the weak adhesive should be left on the floor surface, it can be easily wiped off. Further, since none of the face material, heating panel and high-specific-gravity sheet are screwed or nailed for fastening, there are left no such screw or nail holes in the floor surface. Therefore, the existing floor surface receives no damage on its appearance, and it is possible to maintain its original state. Also, since no damage is given on the separated face material, heating panel and high-specific-gravity sheet, they can be reused.

The floor structure according to the second embodiment of the first aspect of the present invention is now explained. In this floor structure, a high-specific-gravity sheet is placed on a heating panel in the otherwise similar floor structure described above. That is, a heating panel is disposed on the existing floor surface, and a high-specific-gravity sheet is placed thereon. Since the heating panel is placed under a load in the above arrangement, the panel is prevented from rising from the floor surface, and also the frictional force between the heating panel and the existing floor face is increased to prevent the panel from sliding (shifting) at the interface with the existing floor surface. In other words, it is possible to prevent the positional deviation or rising of the heating panel from the existing floor surface. This second embodiment of the first aspect of the present invention is schematically illustrated in FIG. 6, in which reference numeral 4 designates a heating panel, 2 a high-specific-gravity sheet, 11 a partition which is described later, and 8 a face material.

An adhesive may be applied at the interface between the heating panel and the existing floor surface for the purpose of preventing slide (shift) at the interface. In case of applying an adhesive, it should be one which is weak in adhesive force and has little possibility of leaving a trace of application after it is removed. The heating panel, high-specific-gravity sheet and face material used in the second embodiment of the first aspect of the present invention are the same as those used in the first embodiment of the first aspect of the present invention described before.

In the second embodiment of the first aspect of the present invention, preferably a partition is provided on the high-specific-gravity sheet, namely between this sheet and the face material. Resin, paper, wood, inorganic matters with high heat resistance, etc., can be used as the material of the partition. Specifically, various types of thin plates, powder, nonwoven fabric, woven fabric, etc., can be employed as the partition, but generally nonwoven fabric or woven fabric is preferably used. By providing such a partition to separate the high-specific-gravity sheet and the face material disposed thereon, it is possible to prevent the high-specific-gravity sheet from being thermally deformed to stick to the face material and to prevent thermal expansion or contraction of the heating panel and the high-specific-gravity sheet from spreading to the face material.

Further, in order to prevent binding between the heating panel and the high-specific-gravity sheet, it is preferable to interpose a nonwoven fabric or a woven fabric between the heating panel and the high-specific-gravity sheet, too. Since a nonwoven fabric such as mentioned above is disposed on the heating panel, it is preferably of the type which is as low as possible in heat resistance. A fabric with heat resistance of not more than 0.01 m²K/w, preferably not more than 0.001 m²K/W will do. Thickness of the nonwoven fabric used as partition is in the range of 0.01 to 1 mm, preferably 0.05 to 0.5 mm.

The construction method according to the third aspect of the present invention is explained. This construction method is substantially identical with the method according to the second embodiment of the first aspect of the present invention described above, and in setting a heating panel on the existing floor surface, the method comprises the steps of disposing the heating panel on the existing floor surface, placing a high-specific-gravity sheet on the said heating panel, disposing a partition on the said high-specific-gravity sheet, and laying a face material on the said partition. In FIG. 6, reference number 11 refers to the partition.

First, a heating panel is disposed on the existing floor surface. It is preferable not to apply an adhesive between the heating panel and the floor surface for facilitating the work for restoring the original state of the floor at the end of the term of lease. When an adhesive is applied as an exceptional case, it should be of the type which is weak in adhesive force and scarcely leaves its trace of application when removed as mentioned above. The position of installation of the heating panel may be restricted to a section of the existing floor surface where it is desired to heat. Also, the heating panel may be designed to be smaller in area than the high-specific-gravity sheet disposed thereon. A dummy board (a board same as forming the heating panel but having no fluid passing tubes embedded therein) is disposed at the portion where the heating panel is absent and the high-specific-gravity sheet is left exposed.

After the heating panel has been set in position, a high-specific-gravity sheet is paced on the said heating panel and dummy board. A second partition may be disposed on the heating panel before placing the high-specific-gravity sheet on the panel. The presence of such a second partition between the heating panel and the high-specific-gravity sheet is helpful for preventing the heating panel and the high-specific-gravity sheet from sticking fast to each other. The high-specific-gravity sheet exerts a load (its weight) to the heating panel and the dummy board to prevent them from rising up from the existing floor surface and increase the frictional force between the heating panel and dummy board and the existing floor surface to secure the heating panel and dummy board to the floor surface. In order to maximize the effect of the frictional force, the high-specific-gravity sheet is preferably so positioned that it will cover not less than 60%, preferably not less than 80% of the surface of the heating panel and dummy board. The sheet is placed so as not to form any space for fixing the heating panel and dummy board in position especially effectively.

Then, a partition (indicated by numeral 11 in FIG. 6) is disposed on the high-specific-gravity sheet. By providing such a partition to separate the high-specific-gravity sheet and the face material disposed thereon, it is possible to prevent the high-specific-gravity sheet from being stuck to the face material and to prevent thermal expansion and contraction of the heating panel and the high-specific-gravity sheet from spreading to the face material. Therefore, the partition is preferably laid over not less than 80%, preferably not less than 90% of the surface of the high-specific-gravity sheet. Especially preferably, plural sheets of nonwoven fabric are placed closely to each other so as not to form any space between them while laying one upon another to a thickness of about 1 cm to ensure noncontact between the high-specific-gravity sheet and the face material. The nonwoven fabric is preferably fixed temporally on the high-specific-gravity sheet with a double-sided tape. The purpose of this temporary fixing is to prevent positional deviation or shifting of the fabric during the construction work, and such temporary fixing is usually made along the sheet at an interval of about 2 meters. No such temporary fixing will be required when the place to be worked is narrow.

When disposing a face material on the partition, it is preferably not fixed for facilitating restoration of the original state. The heating medium passed through the heating medium tubes in the installed heating panel is adjusted in temperature and pressure by a heating medium circulator and distributed (circulated) to the heating medium tubes through a header. The heating medium circulator is set at an appropriate location either outdoors or indoors. The floor unit according to the second embodiment of the first aspect of the present invention the construction method according to the third aspect of the present invention described above can be adapted to both newly constructed and existing buildings as in the case of the first embodiment of the first aspect of the present invention described previously.

In a building where the said floor structure has been constructed, there may be a necessity to dismantle the once installed floor unit for restoring the original state of the existing floor at the end of the term of lease of the building. Here, the procedure of dismantling the floor structure is explained. First, the face material is removed, and then the high-specific-gravity sheet is separated. Since a partition is interposed between the face material and the high-specific-gravity sheet, it is easy to separate them at the interface. Also, since the high-specific-gravity sheet and the underlaying heating panel are merely attached tight to each other by a load at the interface, there is no difficulty in separating the high-specific-gravity sheet on the heating panel.

After removing the high-specific-gravity sheet, the heating panel is finally stripped off the existing floor surface. No adhesive is applied, in many cases, between the existing floor surface and the heating panel, and even if an adhesive is applied between them, such an adhesive is a weakly adhering type whose trace of adhesion is scarcely left on the floor surface after removal, so that even if part of the weak adhesive should be left on the floor surface, it can be easily wiped off. Further, since none of the face material, heating panel and high-specific-gravity sheet are screwed or nailed for fastening, there are left no screw or nail holes in the floor surface. Therefore, the existing floor surface remains intact in its appearance, and it is possible to maintain its original state. Also, since no damage is given to the separated face material, heating panel and high-specific-gravity sheet, they can be reused.

### EXAMPLES

The examples of the present invention are described in detail below with reference to the accompanying drawings, but the present invention is not limited to these examples but can be embodied in other forms as well without departing from the scope and spirit of the invention.

### Example 1

In FIGS. 1 and 2, reference numeral 1 designates an existing floor with a size of 360 cm X 270 cm. A sheet of high specific gravity 2, which was placed rolled up on the surface of the said floor 1, was rolled back to spread in position on the floor surface. A filler-incorporated rubber sheet (produced by Hayakawa Rubber Co., Ltd.) measuring 1 mm in thickness, 350 cm in width and 360 cm in length and having a density of 2.5 g/cm³ was used as the high-specific-gravity sheet 2. No adhesive was applied at the interface between the existing floor 1 and the high-specific-gravity sheet (a filler-incorporated rubber sheet) 2, and also no screwing or nailing was made for fastening. A nonwoven fabric 3 (produced by Toabo Co., Ltd.), 1 mm thick with a basis weight of 120 g/m², was stuck on the surface of the high-specific-gravity sheet 2 with an acrylic adhesive (trade name "POLYTHICK" produced by Sanyo Chemical Industries, Ltd.).

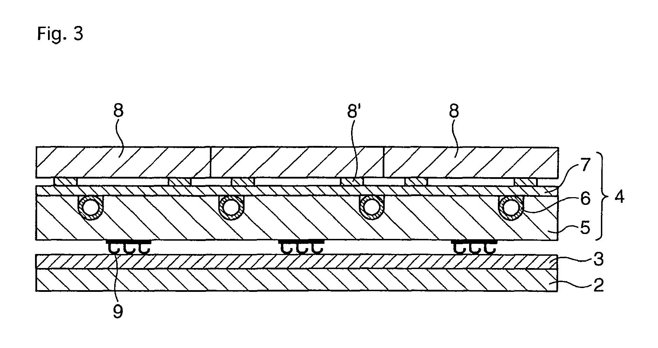

Then a heating panel 4 was disposed on the upper side of the high-specific-gravity sheet 2. This heating panel has a 240 cm X 300 cm quadrilateral flat configuration, and as shown in FIGS. 2 and 3, the 7.2 mm wide and 7.2 mm deep grooves are formed in the surface of a 12 mm thick board 5, with the fluid passing tubes 6 having an outer diameter of 7.2 mm being embedded in the said grooves. The grooves are covered with a composite board (trade name "Alpolic" mfd. by Mitsubishi Chemical Functional Products, Inc. comprising a 1 mm thick aluminum foil and a resin sheet. On the backside of the heating panel 4 are affixed the 15 mm wide face fasteners 9 (trade name "Magic Tape" (registered trade mark) mfd. by 3M) along the fluid tube-embedded grooves at intervals of 300 mm. In disposing the heating panel 4 on the upper side of the high-specific-gravity sheet 2, a parting strip 10 was placed on the nonwoven fabric 3 on the surface of the high-specific-gravity sheet 2 as shown in FIG. 4, and the heating panel 4 was temporally laid thereon for positioning.

After positioning the heating panel 4 on the upper side of the high-specific-gravity sheet 2, the heating panel 4 was once rolled up for removing the parting strip 10. While removing the parting strip 10, the portion of the heating panel where the parting strip has been removed was successively pressed down from the upper side of the panel, whereby the nonwoven fabric 3 attached to the surface side of the high-specific-gravity sheet 2 and the face fasteners attached to the backside of the heating panel 4 were joined and secured to each other. A dummy board was disposed on the exposed portion of the high-specific-gravity sheet2. Face fasteners were also stuck to the backside of the dummy board for fastening it to the nonwoven fabric 3 laid on the high-specific-gravity sheet 2. Then a 3 mm thick plywood face material 8 was laid on the heating panel 4 and dummy board to obtain a floor unit such as shown in FIG. 2. An acrylic adhesive (trade name VHX207 produced by 3M) was applied at the interface between the heating panel 4 and the face material 8.

The floor structure shown in FIGS. 2 and 3 constructed by following the above-described procedure was left as it was for 3 months and then the work for restoring the original state of the existing floor (work for removing the floor structure) was conducted. In the removal work, since no screwing or nailing has been made for fixing in the construction, successive separation of the face material 8, heating panel 4 and high-specific-gravity sheet 2 could be accomplished very easily. Also, since no adhesive was applied at the interface between the existing floor 1 and the high-specific-gravity sheet 2 in the construction work, there was left no trace of adhesive on the existing floor surface after removal of the floor structure, and it was possible to restore the original state of the existing floor 1.

### Example 2

A floor structure shown in FIG. 5 was constructed. A principal difference of the floor unit shown in FIG. 5 from that of FIG. 3 is that the heating panel 4 was secured to the high-specific-gravity sheet 2 by affixing face fasters 9 on the surface of the high-specific-gravity sheet 2 while bonding a nonwoven fabric 3 on the backside of the heating panel 4. In laying the heating panel 4 in position in the construction work of the floor unit shown in FIG. 5, a parting strip 10 was placed on the nonwoven fabric 3 on the surface of the high-specific-gravity sheet 2, then the heating panel 4 was temporally positioned thereon, and after positioning, this heating panel 4 was rolled up for removing the parting strip 10. With the parting strip 10 being removed, the heating panel 4 was pressed down from above thereof to let the nonwoven fabric 3 provided on the surface side of the high-specific-gravity sheet 2 and the face fasteners provided on the backside of the heating panel 4 be attached tight and secured to each other. When the floor structure shown in FIG. 5 was dismantled as in the previous cases, the dismantling operation could be performed very easily and it was possible to restore the original state of the existing floor 1.

### Example 3

A floor structure shown in FIG. 6 was constructed. The floor structure shown in FIG. 5 differs from those of FIGS. 1 to 5 principally in that the high-specific-gravity sheet 2 was disposed on the heating panel 4, and the face material 8 was placed on the high-specific-gravity sheet 2 with a partition 11 interposed between them. The high-specific-gravity sheet 2 was a rolled-up type sheet as in Example 1, and a 2 mm thick, 909 cm wide and 500 cm long filler-incorporated rubber sheet having a density of 2.0 g/cm³ (produced by Hayakawa Rubber Co., Ltd.) was used. A release paper was attached to the underside of the high-specific-gravity sheet 2, but it was partly stripped off in use. The heating panel 4 used here was the same as used in Examples 1 and 2.

In the construction of the floor structure shown in FIG. 6, heating panel 4 was set on the surface of the existing floor 1, with a dummy board disposed around the heating panel 4. Then a high-specific-gravity sheet 2 was placed on the said heating panel 4 and dummy board so as to cover them up entirely, and a load was applied to the heating panel 4 and dummy board. Further, a 90 mm wide and 0.1 mm thick nonwoven fabric (produced by Towa Boseki KK) was laid closely (without forming any space) on the upper side of the high-specific-gravity sheet 2 as a partition 11, with part of the sheet being left exposed. Partition 11 was temporally fixed to the surface of the high-specific-gravity sheet 2 with a both-sided adhesive tape (produced by 3M Co., Ltd.). Finally, a face material 8 was laid over the partition 11. An 8 mm thick wooden movable flooring was used as the face material.

The floor structure shown in FIG. 6 constructed by the procedure described above was subjected to 300-hour floor heating by flowing 80°C hot water through the heating medium tubes, and then the floor unit was dismantled as in the preceding examples. The face material 8 (wooden flooring) could be separated without a hitch at the area where the partition 11 of nonwoven fabric was laid, but a certain effort was required for the separation at the area devoid of the partition 11 as the rubber denatured by heat clung to the flooring. Also, the portion which has been in contact with the flooring was discolored. Partition 11 could be stripped off without problem. When it was tried to separate the high-specific-gravity sheet 2, although it could be easily separated at the part where the release paper was applied, a great deal of effort was needed for the separation at the part devoid of the release paper as the rubber stuck to the heating panel 4 due to heat.

As described above, with the floor structure shown in FIG. 6, too, it was possible to separate the face material 8, partition 11, high-specific-gravity sheet 2 and heating panel 4 relatively easily since no screwing or nailing was used for fixing in the construction work. It is notable that at the area where a release paper was applied to the high-specific-gravity sheet 2 and the area where partition 11 was disposed, all of the face material 8, high-specific-gravity sheet 2 and heating panel 4 could be recovered in a bandbox condition like new. Further, since no adhesive was applied at the interface between the existing floor 1 and heating panel 4 in the construction of the floor structure, there was left no trace of adhesive on the existing floor surface when the floor unit was dismantled, and it was possible to restore the original state of the existing floor 1.

### DESCRIPTION OF REFERENCE NUMERALS

1: existing floor
2: sheet of high specific gravity
3: nonwoven fabric
4: heating panel
5: board
6: heating medium tube
7: aluminum foil
8: face material
9: face fastener
10: parting strip
11: partition

## Claims

1. A heatable floor structure comprising a heating panel set on the existing floor surface of a building and a face material disposed on said heating panel, said heating panel having formed on its surface side the grooves in which the heating medium tubes are embedded, with a flexible leaf being laid thereon, said heating panel being placed under a load of a strength sufficient to regulate the positional deviation or rise of the panel from the said existing floor surface.

2. A heatable floor structure according to claim 1, wherein a sheet of high specific gravity is attached to the underside of the heating panel.

3. A heatable floor structure according to claim 1, wherein a sheet of high specific gravity is placed on the heating panel.

4. A heatable floor structure according to claim 2 or 3, wherein the density of the high-specific-gravity sheet is not less than 1.5 g/cm³.

5. A heatable floor structure according to any one of claims 2 to 4, wherein the high-specific-gravity sheet is an asphalt-incorporated short fiber sheet or a filler-incorporated rubber sheet.

6. A heatable floor structure according to any one of claims 2 to 5, wherein the flexible leaf of the heating panel is selected from the group consisting of metal foil, woven fabric, nonwoven fabric, resin sheet and laminates thereof.

7. A heatable floor structure according to claim 2, wherein a high-specific-gravity sheet is attached to the underside of the heating panel by making use of an anchor effect, adhesive force, sticking force, adsorptive force, magnetic force or a combination thereof.

8. A heatable floor structure according to claim 2, wherein a weak adhesive or sticking agent is applied between the heating panel and the face material.

9. A construction method of a heatable floor structure in which a heating panel having the heating medium tubes embedded in the grooves formed on its surface side and also having a flexible leaf laid thereon is set on the surface of the existing floor of a building, which method comprises the steps of disposing a sheet of high specific gravity on said existing floor surface, fixing said heating panel on said high-specific-gravity sheet, and disposing a face material on said heating panel.

10. A construction method of a heatable floor structure in which a heating panel having the heating medium tubes embedded in the grooves formed on its surface side and also having a flexible leaf laid thereon is set on the surface of the existing floor of a building, which method comprises the steps of disposing said heating panel on said existing floor surface, placing a sheet of high specific gravity on said heating panel, disposing a partition on said high-specific-gravity sheet, and laying a face material on said partition.

11. A heatable floor structure comprising a sheet of high specific gravity disposed on the surface of the existing floor of a building and having a nonwoven fabric attached on the surface side thereof, a heating panel fixed on said high-specific-gravity sheet, and a face material laid on said heating panel, in which said heating panel has formed on its surface side the grooves where the heating medium tubes are embedded therein, with a flexible leaf being affixed thereon, and said panel is also fixed to the nonwoven fabric on the surface of said high-specific-gravity sheet by an adhesive tape attached to the backside of the panel.

12. A heatable floor structure comprising a sheet of high specific gravity disposed on the surface of the existing floor of a building and having an adhesive tape attached to the surface side thereof, a heating panel fixed on said high-specific-gravity sheet, and a face material laid on said heating panel, in which said heating panel has formed on its surface side the grooves where the heating medium tubes are embedded, with a flexible leaf being affixed thereon, and said heating panel is also secured to an adhesive tape on the surface of said high-specific-gravity sheet by a nonwoven fabric attached on the backside of the panel.

13. A heatable floor structure according to claim 11 or 12, wherein the density of the high-specific-gravity sheet is not less than 1.5 g/m³.

14. A heatable floor structure according to any one of claims 11 to 13, wherein the high-specific-gravity sheet is an asphalt-incorporated short fiber sheet or a filler-incorporated rubber sheet.

15. A heatable floor structure according to any one of claims 11 to 14, wherein the flexible leaf of the heating panel is one selected from the group consisting of metal foil, woven fabric, nonwoven fabric, resin sheet and laminates thereof.

16. A heatable floor structure according to any one of claims 11 to 14, wherein a weak adhesive or sticking agent is applied between the heating panel and the face material.

17. A heatable floor structure construction method comprising the steps of disposing a sheet of high specific gravity having a nonwoven fabric attached to the surface side thereof on the surface of the existing floor of a building, fixing a heating panel having an adhesive tape attached to the backside thereof on said high-specific-gravity sheet, and laying a face material on said heating panel by applying a weak adhesive or sticking agent between them, in which:
said heating panel has formed on its surface side the grooves where the heating medium tubes are embedded therein, with a flexible leaf being affixed thereon,
in the step of fixing said heating panel on said high-specific-gravity sheet, a parting strip is temporally placed on the surface of said high-specific-gravity sheet and,
after positioning said heating panel on said parting strip, said parting strip is removed, thereby fixing the adhesive tape of said heating panel to the nonweven fabric of said high-specific-gravity sheet.

18. A heatable floor structure construction method comprising the steps of disposing a sheet of high specific gravity having an adhesive tape attached to the surface side thereof on the surface of the existing floor of a building, fixing a heating panel having a nonwoven fabric attached to the backside thereof on said high-specific-gravity sheet, and laying a face material on said heating panel by applying a weak adhesive or sticking agent between them, in which:
said heating panel having formed on its surface side the grooves where the heating medium tubes are embedded therein, with a flexible leaf being affixed thereon,
in the step of fixing said heating panel on said high-specific-gravity sheet, a parting strip is temporally placed on the surface of said high-specific-gravity sheet, and
after positioning said heating panel on said parting strip, said parting strip is removed, thereby fixing the nonwoven fabric of said heating panel to the adhesive tape of said high-specific-gravity sheet.

19. A heatable floor structure construction method according to claim 17 or 18, wherein the parting strip is a strip selected from the group consisting of paper, resin-made film, metal foil and laminates thereof.

20. A heatable floor structure construction method according to claim 19, wherein the parting strip is a strip which is 0.005 to 2 mm thick, weighs 1 to 1,000 g/m² and has a tensile strength of not less than 1 N/5 cm (JIS L1096).
